# EUROPEAN PATENT SPECIFICATION

(11) **EP 1 578 132 B1**
(45) Date of publication and mention of the grant of the patent: **22.10.2008**
(21) Application number: 05005202.6
(22) Date of filing: 10.03.2005
(51) Int. Cl.: H04N 7/24, H04N 5/445

(54) **Method for diplaying the thread of program in a broadcasting receiver**
Verfahren zur Darstellung des Handlungsstranges einer Sendung in einem Rundfunkempfänger
Procédé d'affichage de l'historique d'un programme dans un récepteur de radiodiffusion

(30) Priority: 19.03.2004 KR 2004018790
(43) Date of publication of application: 21.09.2005
(73) Proprietor: LG ELECTRONICS INC., Seoul 150-875 (KR)
(72) Inventor: Jeong, Jin Kuk, Yeongdeungpo-gu Seoul 150-780 (KR)
(74) Representative: Rupprecht, Kay

(56) References cited:
- EP-A- 1 006 459
- US-A1- 2002 010 926
- US-A1- 2002 170 068
- US-A1- 2003 033 502
- US-A1- 2003 093 790
- US-A1- 2004 019 906
- US-B1- 6 510 555

## Description

### 1. Field of the Invention

The present invention relates to a method for displaying the thread of a program in a broadcasting receiver, wherein the thread of hitherto broadcast portions of a program that is being viewed can be displayed, so that a user can confirm the thread in a broadcasting receiver like a television set.

Here, a program comprises a sequence of program portions and a program thread composes a sequence of descriptors corresponding to said sequence of program portions

### 2. Description of the Related Art

The document US 2002/010926 A1 discloses a system for displaying a TV program progress time, i.e., a beginning time, a terminating time, and a televise elapsed time of a program received at a TV receiver. In this prior-art, a system is taken into account which seems to be adapted and suitable to directly display program progress time information with respect to a currently viewed program on a screen immediately upon request. For this purpose, program guide information containing a program schedule is received and processed by the broadcasting receiver, the program guide information being provided by a digital TV broadcasting system. After receiving and processing the program guide information in the conventional broadcasting receiver, the program guide information is stored, and the time information about the relevant program is displayed on a picture tube when the user issues a command requesting display of the program progress time with respect to the currently viewed program.

The document US 2002/0170068 discloses a system, which is related to television program production and television program display. In this prior art, a system is taken into account which seems to be adapted for operating at a fine program content granularity in order to record only those video content segments which are of interest. For this purpose, firstly a signal containing a conventional video content stream is processed in order to analyze and identify the content of the video content stream, said conventional video content stream including images of an event. Thereafter, segments of the content are classified against predetermined content categories. In fact, the content segments identified and classified in the conventional systems contain video clips having a very short duration or a longer duration of several minutes or more. Thereafter, i.e., after classifying the content segments, in the conventional system, metadata tags associated with the content segments are created. Each of the created metadata tags contains data that identifies one or more attributes of the associated content segment.

With the development of digital technology, the digitalization of analog broadcast has been positively promoted at every country in the world. The transition of the analog broadcast to digital broadcast leads to multi-channel and high-quality broadcast. Digital television broadcast provides an electronic program guide (EPG) for allowing viewers to confirm information on broadcast programs, as well as video and audio signals that users can view and listen to.

Users of broadcasting receivers can obtain information on programs, which were broadcast or are scheduled to be broadcast over respective channels, using the EPG transmitted together with a digital television broadcast signal, and can select a channel for a desired program in the EPG to receive and view a desired broadcast. Further, the users can confirm the thread and the like of a program and also perform various kinds of functions including reserved recording.

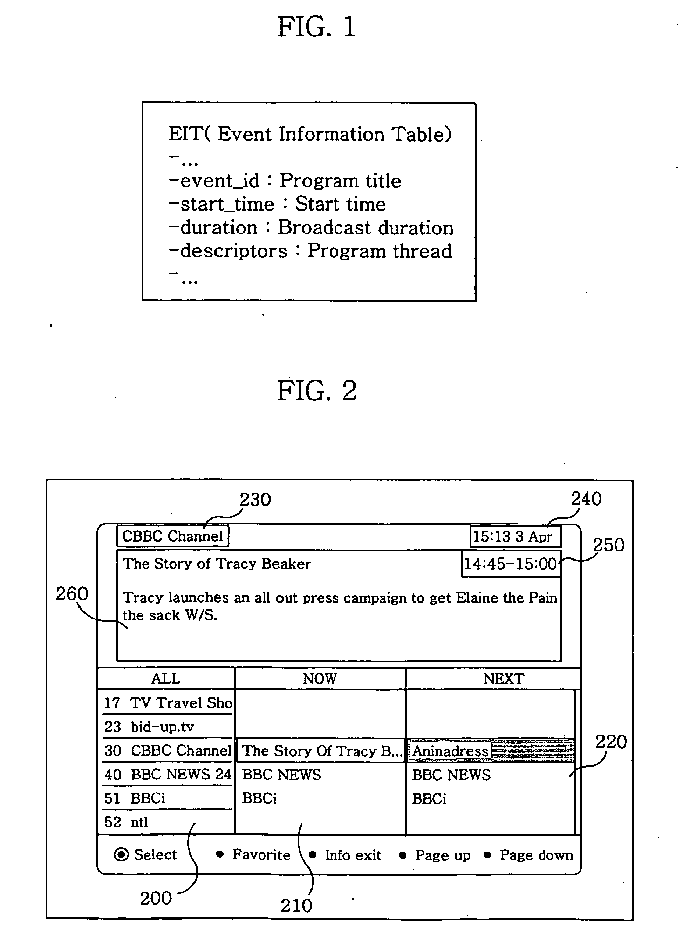

The EPG contains an event information table (EIT), and the EIT contains information such as a program title *event_id*, a broadcast start time *start_time*, a broadcast duration *duration,* a program thread *descriptors* and the like, as shown in Fig. 1.

When a user instructs a broadcasting receiver to display an EPG, the broadcasting receiver displays, on a display panel, for example, a plurality of broadcast channels and channel names 200, titles 210 of programs that are being currently broadcast over respective channels, and titles 220 of programs that will be subsequently broadcast, as shown in Fig. 2. When a cursor is placed on the position of the title of a program over a given channel, for example, a 'The Story Of Tracy Beaker' that is the title of a program which is being currently broadcast over 'CBBC Channel', the broadcasting receiver displays channel name 230 of 'CBBC Channel', current time 240, and broadcast duration 250 of the program, as well as the text thread of the program in a thread display area 260, so that the user confirms them.

In this case, the thread of the program displayed in the thread display area 260 is the whole thread of the program, and thus, the user can confirm both the thread of portions of the program that have been broadcast up to now and the thread of portions of the program that will be broadcast in the future.

Therefore, there is a problem in the prior art in that even when a user desires to confirm the thread of a program only up to an intermediate portion of the program while viewing the program from the intermediate portion thereof, the user is forced to confirm the whole thread of the program rather than the thread of only hitherto broadcast portions of the program, which diminishes curiosity on the thread of subsequent portions of the program.

### SUMMARY OF THE INVENTION

Accordingly, an object of the present invention is to provide a method for displaying the thread of a program in a broadcasting receiver, wherein upon input of a command for displaying the thread of a program, a current broadcasting progress state of a program is determined, and the thread of only hitherto broadcast portions of the program corresponding to the determined current broadcasting progress state is extracted and displayed.

The progress state represents the percentage by which a program has progressed with respect to the duration of the program. In the following description, the term progress rate is used instead of progress state.

Another object of the present invention is to provide a method for displaying the thread of a program in a broadcasting receiver, wherein if a program is a serial, the threads of pieces of the program that have been previously broadcast are displayed so that a user confirms the threads of the pieces of the program that have been broadcast from a first piece to a currently broadcast piece of the program.

According to an aspect of the present invention for achieving the objects, there is provided a method for displaying the thread of a program in a broadcasting receiver as defined in claim 1.

According to another aspect of the present invention, there is provided a broadcast receiver for displaying the thread of a program as defined in claim 8.

### BRIEF DESCRIPTION OF THE DRAWINGS

The above and other objects, features and advantages of the present invention will become apparent from the following description of preferred embodiments given in conjunction with the accompanying drawings, in which:
Fig. 1 illustrates information contained in an EIT of an EPG;
Fig. 2 exemplarily illustrates a state where information contained in the EIT of the EPG is displayed on a screen;
Fig. 3 is a block diagram exemplarily showing a configuration of a broadcasting receiver to which a method for displaying the thread of a program according to the present invention is applied;
Fig. 4 is a flowchart illustrating a method for displaying the thread of a program according to an embodiment of the present invention;
Fig. 5 exemplarily illustrates an EIT that a broadcasting station provides by means of the method for displaying the thread of a program according to the present invention;
Figs. 6a and 6b exemplarily illustrate states where a program is a one-act drama and the thread of the program is displayed depending on a program progress rate by means of the method for displaying the thread of a program according to the present invention;
Figs. 7a and 7b exemplarily illustrate states where a program is a serial and the thread of the program is displayed depending on a program progress rate by means of the method for displaying the thread of a program according to the present invention;
Fig. 8 is a flowchart illustrating a method for displaying the thread of a program according to another embodiment of the present invention; and
Fig. 9 exemplarily illustrates a state where a thread display icon is displayed on a program display screen by means of the method for displaying the thread of a program according to the other embodiment of the present invention.

### DETAILED DESCRIPTION OF THE INVENTION

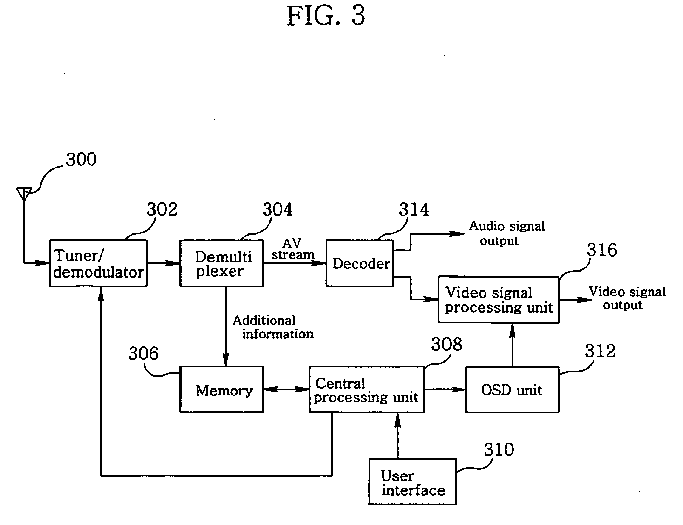

Hereinafter, a method for displaying the thread of a program according to the present invention will be described in detail with reference to the accompanying drawings, especially, Figs. 3 to 9.

Fig. 3 is a block diagram showing a configuration of a broadcasting receiver to which a method for displaying the thread of a program according to the present invention is applied. As shown in the figure, the broadcasting receiver comprises a tuner/demodulator 302 for tuning and demodulating a broadcast signal over a prescribed channel among broadcast signals received via an antenna 300; a demultiplexer 304 for demultiplexing an AV stream and additional information containing an EPG from an output signal of the tuner/demodulator 304; a memory 306 for storing the additional information demultiplexed by the demultiplexer 304 therein; a central processing unit 308 for controlling an overall operation of the broadcasting receiver and the display of the additional information stored in the memory 306; a user interface 310 for inputting an operation instruction into the central processing unit 308 in response to a user's operation; an on-screen display (OSD) unit 312 for generating an OSD signal under the control of the central processing unit 308; a decoder 314 for decoding the AV stream demultiplexed by the demultiplexer 314 to generate an audio signal and a video signal; and a video signal processing unit 316 for mixing and outputting the video signal from the decoder 314 and the OSD signal from the OSD unit 312.

In the broadcasting receiver constructed as above, the tuner/demodulator 302 tunes and demodulates a broadcast signal over a prescribed channel among broadcast signals received via the antenna 300 under the control of the central processing unit 308. The demultiplexer 304 demultiplexes the AV stream and the additional information from the demodulated signal, and the demultiplexed additional information is stored in the memory 306.

The decoder 314 decodes the AV stream, which has been demultiplexed by the demultiplexer 304, to output an audio signal and a video signal, and the video signal processing unit 316 processes the video signal and outputs the processed video signal, so that a user views the broadcast over the prescribed channel.

When the user instructs, via the user interface 310, the central processing unit 308 to display the EPG, the central processing unit 308 reads the EPG from the memory 306 and controls the OSD unit 312 according to the read EPG to generate an OSD signal of the EPG. The generated OSD signal is outputted via the video signal processing unit 316, so that the user confirms the EPG which is displayed on a display panel.

In this situation, when the user places a cursor on a desired program on the EPG while moving the cursor within the EPG displayed on the display panel, and then instructs the central processing unit 308 to display the thread, the central processing unit 308 reads the thread of the program from the memory 306 and controls the OSD unit 312 according to the read thread to generate the OSD signal. The generated OSD signal is outputted via the video signal processing unit 316 and is displayed on the display panel, so that the user confirms the OSD.

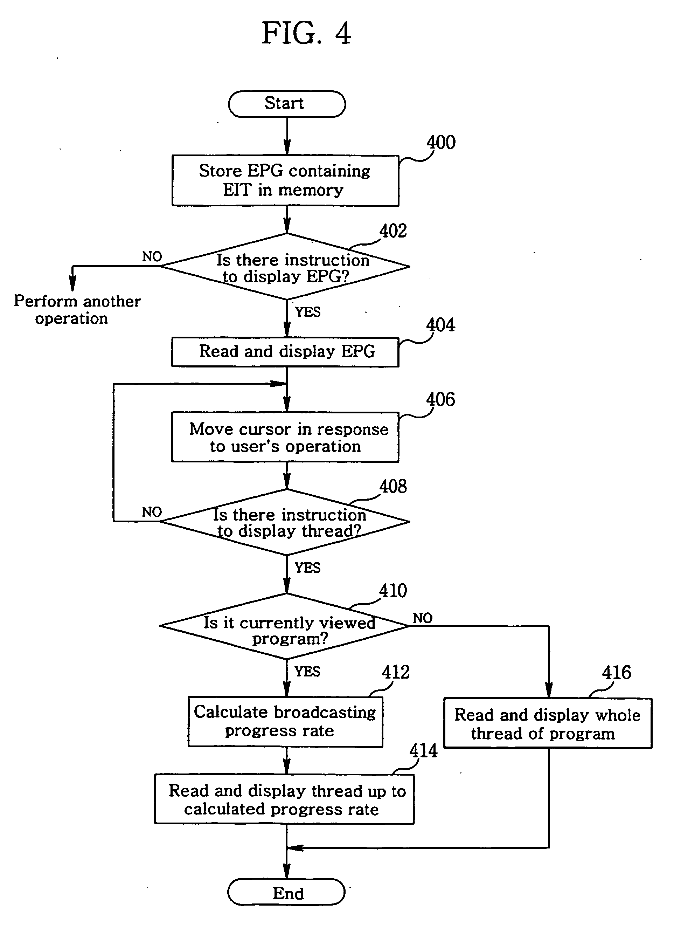

Fig. 4 is a flowchart illustrating a method for displaying the thread of a program according to an embodiment of the present invention. As shown in the figure, EPG information containing an EIT, which is demultiplexed by the demultiplexer 304 from the broadcast signal that is received and demodulated by the tuner/demodulator 302, is stored in the memory 306 (step 400).

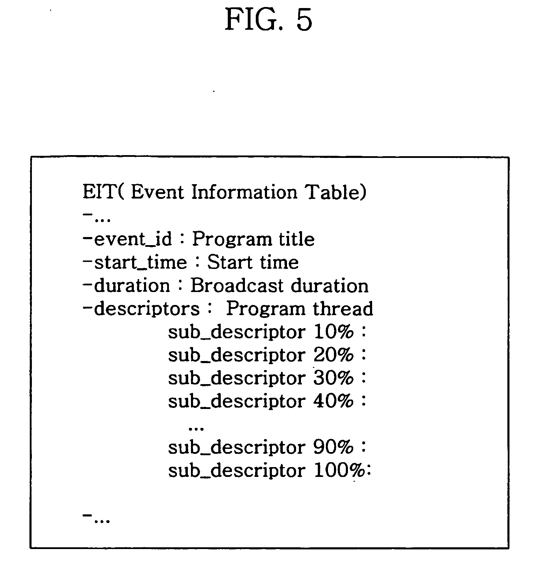

The EPG is generated and broadcast together with the broadcast signal by a broadcasting station. Before the broadcasting station broadcasts the EIT within the EPG, for example, the broadcasting station classifies the threads of a predetermined program depending on a progress rate of the program and inserts the threads into the EIT if the program is a one-act drama; or the broadcasting station classifies threads up to previously broadcast pieces of a program on a piece basis and inserts the threads into the EIT, and simultaneously classifies threads depending on a broadcasting progress rate of a currently broadcast piece of the program and inserts the threads into the EIT if the program is a serial, as shown in Fig. 5.

When the user instructs, via the user interface 310, the central processing unit 308 to display the EPG (step 402), the central processing unit 308 reads the EPG that has been stored in the memory 306 and controls the OSD unit 312 according to the read EPG so as to generate the OSD signal and display the EPG on the screen of the display panel (step 404).

The central processing unit 308 moves the cursor on the EPG display screen in response to a cursor movement instruction or the like which is received via the user interface 310 (step 406). The central processing unit 308 determines whether the user instructs the central processing unit 308 to display the thread of a predetermined program after the user places the cursor on the program (step 408).

If it is determined in step 408 that the user instructs the central processing unit 308 to display the thread, the central processing unit 308 determines whether the program on which the cursor is placed is a currently viewed program (step 410). If the program is determined to be a currently viewed program, the central processing unit 308 calculates a broadcasting progress rate of the program up to now (step 412). That is, the central processing unit 308 calculates how much percentage of the program has been broadcast, based on the start time and the broadcasting duration of the program, and the current time in the EIT.

Here, the calculated broadcasting progress rate is adjusted based on a broadcasting progress of the thread of the program that has been provided in the EIT. For example, if the thread provided in the EIT has been classified according to broadcasting progress rates of 10%, 20%, ... , 100%, the central processing unit 308 adjusts the broadcasting progress rate by rounding off the calculated broadcasting progress rate to the nearest ten. Hereinafter 'calculated' is broadly referred to as 'adjusted'.

When the broadcasting progress rate of the program has been calculated, the central processing unit 308 reads the thread of portions of the program up to the calculated broadcasting progress rate from the EIT (step 414) and controls the OSD unit 312 according to the read thread to generate an OSD signal. The OSD signal of the generated thread is outputted via the video signal processing unit 316 and is displayed on the screen of the display panel, so that the user confirms the thread of the portions of the program which have been broadcasted up to now.

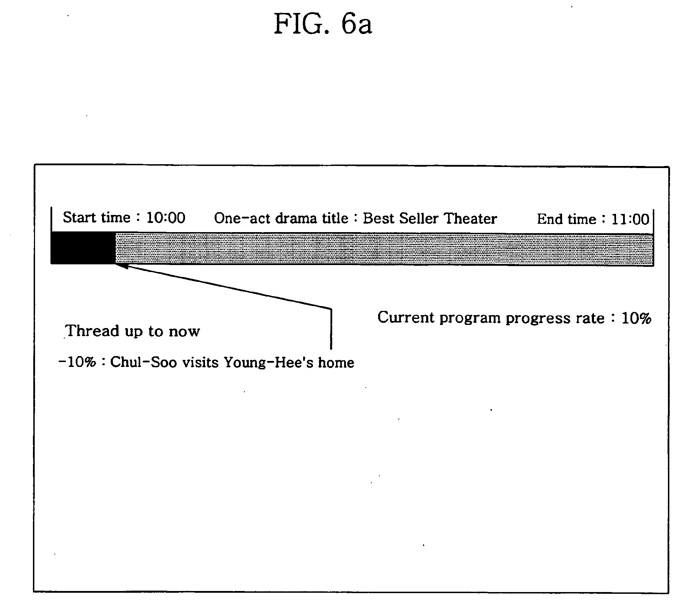

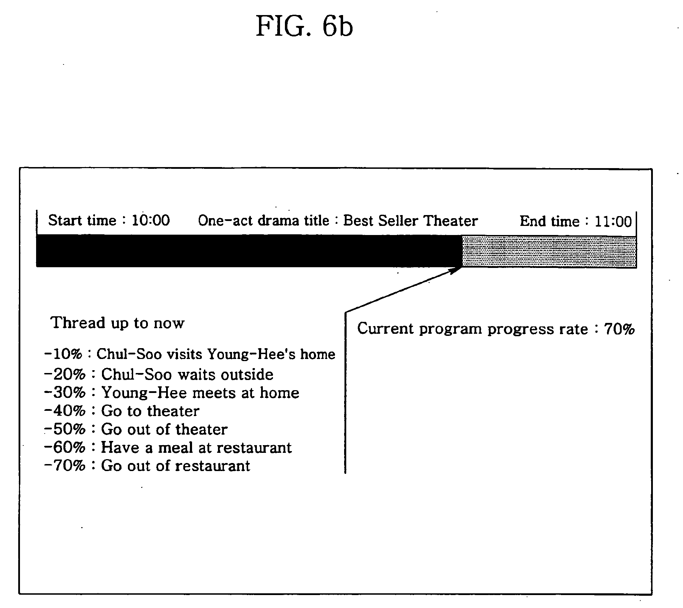

For example, if the program is a one-act drama and the progress rate of the program is 10%, the thread of only portions of the program corresponding to 10% of the program is displayed as shown in Fig. 6a. If the progress rate of the program is 70%, the thread of portions of the program corresponding to 70% of the program is displayed as shown in Fig. 6b.

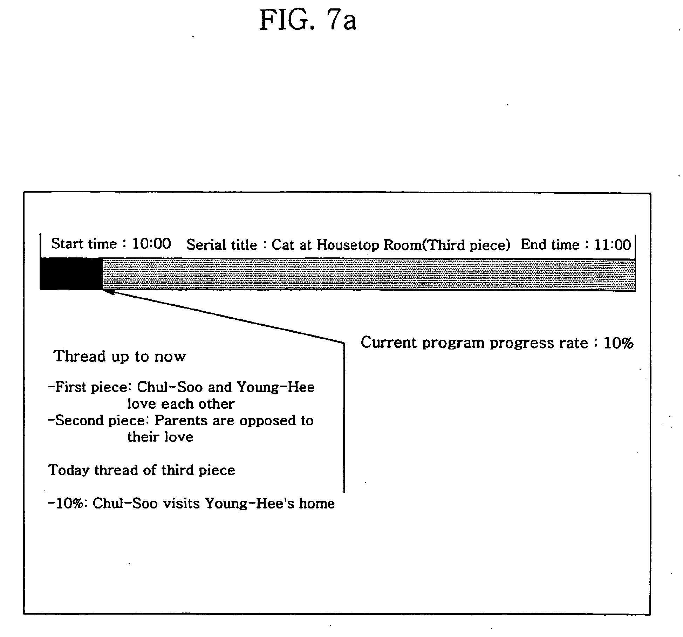

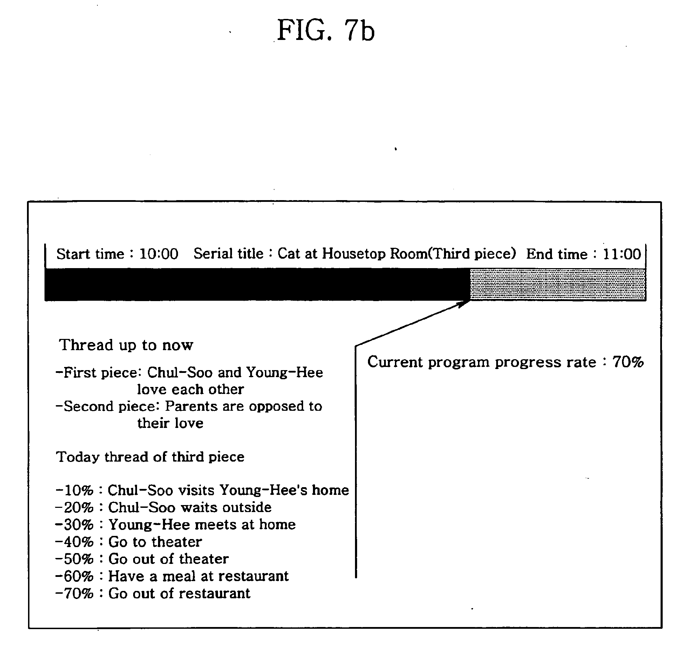

If the program is a serial and the progress rate of the program is 10%, both the threads of previously broadcast pieces of the program and the thread of only portions of a currently broadcast piece of the program corresponding to 10% of the currently broadcast piece are displayed, as shown in Fig. 7a. If the progress rate of the program is 70%, the threads of the previously broadcast pieces of the program and the thread of only portions of the currently broadcast piece of the program corresponding to 70% of the currently broadcast piece are displayed, as shown in Fig. 7b.

If it is determined in step 408 that the program is not a currently viewed program, the central processing unit 308 reads the whole thread of the program from the EIT and controls the OSD unit 312 according to the read whole thread to display the whole thread of the program (step 416).

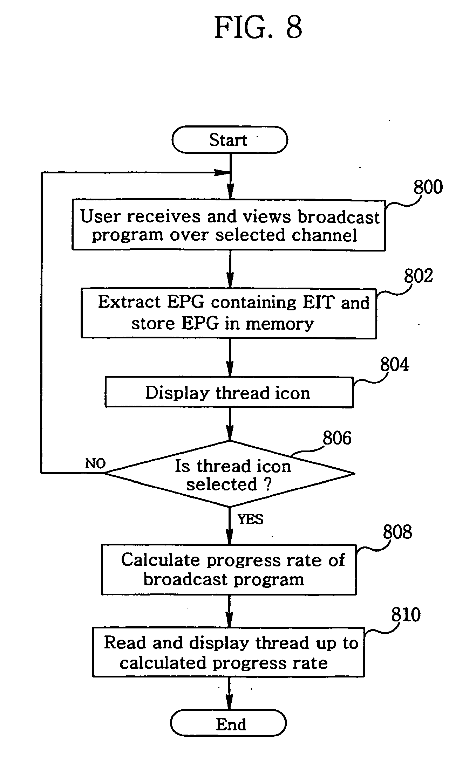

Fig. 8 is a flowchart illustrating a method for displaying the thread of a program according to another embodiment of the present invention. As shown in the figure, the central processing unit 308 causes the tuner/demodulator 302 to receive and demodulate a broadcast program over a channel selected by a user, the demultiplexer 304 to demultiplex the demodulated broadcast program, and the decoder 314 to decode the demultiplexed broadcast program, so that the user views the broadcasting (step 800). The demultiplexer 304 demultiplexes the EPG information containing the EIT and the demultiplexed EPG information is stored in the memory 306 (step 802).

The central processing unit 308 then controls the OSD unit 312 to generate an OSD signal of a thread icon, and the generated OSD signal of the thread icon is mixed with the video signal at the video signal processing unit 316 and is displayed on the display panel (step 804).

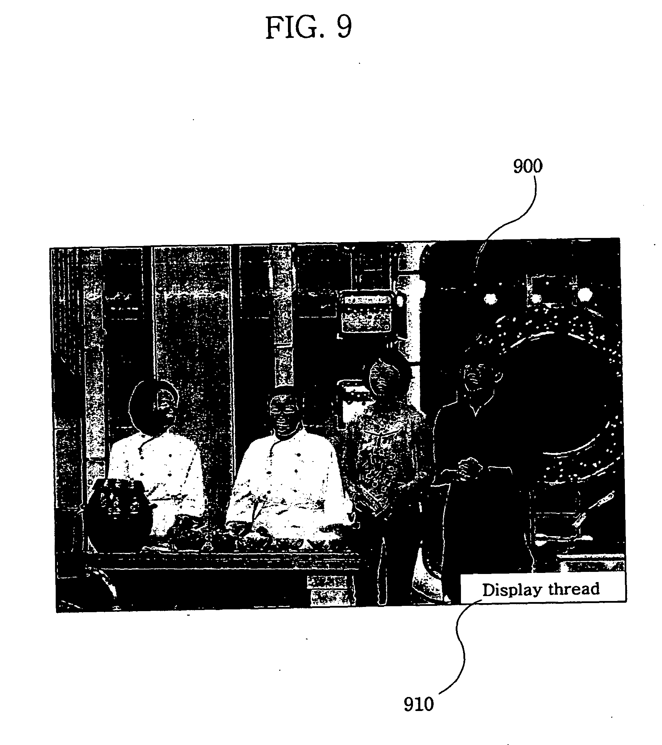

For example, as shown in Fig. 9, a thread icon 910 is displayed on a lower right portion of a display panel 900 on which an image of the program is displayed.

The central processing unit 308 determines whether the user selects the thread icon 910 via the user interface 310 (step 806). If it is determined that the user selects the thread icon 910, the central processing unit 308 calculates the progress rate of the broadcast program that is being currently viewed by the user (step 808). That is, as in the aforementioned embodiment, the central processing unit 308 calculates how much percentage of the program has been broadcast, based on the start time and the broadcasting duration of the program, and the current time in the EIT.

When the broadcasting progress rate of the program has been calculated, the central processing unit 308 reads the thread of portions of the program up to the calculated broadcasting progress rate from the EIT, and controls the OSD unit 312 according to the read thread to generate an OSD signal. The generated OSD signal of the thread is outputted via the video signal processing unit 316 and is displayed on the screen of the display panel, so that the user confirms the thread of the portions of the program which have been broadcast up to now (step 810).

According to the present invention described above, when a user requests to display the thread of a currently viewed program, a broadcasting progress rate is calculated and the thread of only portions of the program up to the calculated broadcasting progress rate is extracted and displayed if the broadcast program is a one-act drama, or both the threads of previously broadcast pieces of the program and the thread of only portions of a currently broadcast piece of the program up to the current broadcasting progress rate are extracted and displayed if the program is a serial. Therefore, there are advantages in that even though the user starts to view a program from an intermediate portion thereof, the user simply confirms the thread or threads of previously broadcast portions or pieces of the program but cannot know the thread or threads of subsequently broadcast portions or pieces of the program, whereby the user is led to continuous viewing of the program with curiosity.

Although the present invention has been shown and described in connection with the preferred embodiments of the present invention, it will be readily understood by those skilled in the art that various modifications and changes can be made thereto without departing from the scope of the present invention defined by the appended claims.

## Claims

1. A method for displaying a thread of a program in a broadcasting receiver, wherein a program comprises a sequence of program portions and a program thread comprises a sequence of descriptors corresponding to said sequence of program portions, the method comprising the steps of:
at a broad casting station: - classifying the description comprised in the thread of a predetermined program according to a progress state of the program and inserting the classified threads into an event information table EIT;
- generating an electronic program guide EPG containing the event information table EIT and broadcasting the electronic program guide EPG together with a broadcast signal of the program;
at the broad casting receiver: - receiving the electronic program guide EPG and the broadcast signal at a broadcasting receiver;
- extracting the electronic program guide EPG from the received broadcast signal and storing the extracted electronic program guide EPG in a memory means (306);
- if an instruction to display the electronic program guide EPG is inputted via an user interface means (310), reading the electronic program guide EPG from the memory means (306) to display the read electronic program guide EPG on a screen (312) by a central processing unit (308);
- if a program is selected on the displayed electronic program guide EPG and an instruction to display the thread of the program is inputted, calculating a broadcasting progress state of the program using the electronic program guide EPG; and
- extracting the description comprised in the thread of the program up to the calculated broadcasting progress state from the electronic program guide EPG and displaying the extracted descriptors.

2. The method as claimed in claim 1, wherein the step of calculating the broadcasting progress state comprises the step of extracting a start time and a broadcasting duration of the program, and a current time from the event information table EIT contained in the electronic program guide EPG to calculate the broadcasting progress state.

3. The method as claimed in claim 1 or 2, wherein the step of extracting descriptors comprised in the thread of the program comprises the step of extracting the descriptors comprised in the thread of the program from the event information table EIT contained in the electronic program guide EPG.

4. The method as claimed in at least one of the preceding claims, wherein if the program is a serial, the step of displaying the thread of the portions of the program comprises the step of simultaneously displaying the threads of previously broadcast pieces of the program.

5. The method as claimed in at least one of the preceding claims, further comprising the step of extracting the whole thread of the program from the electronic program guide EPG and display the extracted whole thread, if an instruction to display the thread of a program which is not being currently viewed is inputted.

6. The method as claimed in claim 5, wherein the step of extracting the whole thread of the program comprises the step of extracting the whole thread of the program from the event information table EIT contained in the electonic program guide.

7. The method as claimed in at least one of the preceding claims, wherein the electronic program guide EPG and the thread are displayed with on-screen display OSD signals.

8. A broadcast receiver for displaying the thread of a program, wherein a program comprises a sequence of program portions and a program thread comprises a sequence of descriptors corresponding to said sequence of program portions, the broadcast receiver comprising:
- tuner/demodulator means (302) for receiving and demodulating a broadcast signal over a channel selected by a user;
- demultiplexer means (304) for extracting an AV stream from the demodulated broadcast signal, so that the user can view an image of the AV stream, said demultiplexer means (304) being further adapted to extract an electronic program guide EPG from the demodulated broadcast signal, the electronic program guide EPG containing an event information table EIT having the descriptors comprised in the thread of a predetermined program which have been classified according to a corresponding progress state of the program;
- memory means (306) for storing the extracted electronic program guide EPG;
- display means (312) for displaying the image of the AV stream and for simultaneously displaying a thread icon for use in instructing to display the thread of the program;
- user interface means (310) for receiving a selection instruction through the thread icon; and
- central processing means (308) for controlling the demultiplexer means (304), wherein the central processing means (308) is adapted to calculate a broadcasting progress state of a program that is being currently viewed by using the electronic program guide EPG and to extract the descriptors comprised in the thread of the program up to the calculated broadcasting progress state from the electronic program guide EPG and to display the extracted descriptors comprised in the thread, if the selection instruction through the thread icon is inputted via the user interface means (310).

9. The broadcast receiver as claimed in claim 8, wherein the central processing means (308) is further adapted to extract a start time and a broadcasting duration of the program, and a current time from an event information table EIT contained in the electronic program guide EPG to calculate the broadcasting progress state.

10. The broadcast receiver as claimed in claim 8 or 9, wherein the central processing means (308) is further adapted to extract the descriptors comprised in the thread of the program from an event information table EIT contained in the electronic program guide EPG.

11. The broadcast receiver, as claimed in at least one of the claims 8 to 10, wherein if the program is a serial, the central processing means (308) is further adapted to simultaneously display the threads of previously broadcast pieces of the program.

12. The broadcast receiver, as claimed in at least one of the claims 8 to 11, wherein the thread icon, the electronic program guide EPG and the thread are displayed with on-screen display OSD signals.

## Patentansprüche

1. Verfahren zur Darstellung eines Handlungsstranges eines Programms in einem Rundfunkempfänger, wobei ein Programm eine Folge von Programmteilen aufweist und ein Programmhandlungsstrang eine Folge von Deskriptoren aufweist, die der Folge von Programmteilen entsprechen, wobei das Verfahren die Schritte aufweist:
in einem Rundfunksender:
- Klassifizieren der Deskriptoren, die in dem Handlungsstrang eines vorbestimmten Programms entsprechend einem Fortgang des Programms enthalten sind, und Einfügen der klassifizierten Handlungsstränge in eine Ereignisinformationstabelle EIT;
- Erzeugen einer elektronischen Programmzeitschrift EPG, welche die Ereignisinformationstabelle EIT enthält, und Übertragen der elektronischen Programmzeitschrift EPG zusammen mit einem Rundfunksignal des Programms;
in einem Rundfunkempfänger:
- Empfangen der elektronischen Programmzeitschrift EPG und des Rundfunksignals mit einem Rundfunkempfänger;
- Entnehmen der elektronischen Programmzeitschrift EPG aus dem empfangenen Rundfunksignal und Speichern der abgerufenen Programmzeitschrift EPG in einem Speichermittel (306);
- wenn eine Instruktion zur Anzeige der elektronischen Programmzeitschrift EPG über ein Benutzerschnittstellenmittel (310) eingegeben wird, Lesen der elektronischen Programmzeitschrift EPG vom Speichermittel (306), um die gelesene elektronische Programmzeitschrift EPG auf einem Bildschirm (312) durch eine Prozessoreinheit (308) anzuzeigen;
- wenn ein Programm auf der dargestellten elektronischen Programmzeitschrift EPG ausgewählt wird und eine Anweisung, den Handlungsstrang des Programms anzuzeigen, eingegeben wird, wird ein Sendungsverlaufszustand des Programms unter Verwendung der elektronischen Programmzeitschrift berechnet; und
- Entnehmen des Deskriptors, welcher im Handlungsstrang des Programms enthalten ist, bis zum berechneten Sendungsverlaufszustand aus der elektronischen Programmzeitschrift EPG und Anzeigen des entnommenen Deskriptors.

2. Verfahren nach Anspruch 1, wobei der Schritt der Berechnung des Sendungsverlaufszustandes den Schritt des Entnehmens einer Anfangszeit und einer Sendungsdauer des Programms und einer aktuellen Zeit aus der Ereignisinformationstabelle EIT aufweist, welche in der elektronischen Programmzeitschrift EPG enthalten ist, um den Sendungsverlaufszustand zu berechnen.

3. Verfahren nach Anspruch 1 oder 2, wobei der Schritt des Entnehmens des Deskriptors, welcher im Handlungsstrang des Programms enthalten ist, den Schritt der Entnahme des Deskriptors, welcher im Handlungsstrang des Programms enthalten ist, aus der Ereignisinformationstabelle EIT, welche in der elektronischen Programmzeitschrift EPG enthalten ist, aufweist.

4. Verfahren nach mindestens einem der vorhergehenden Ansprüche, wobei wenn das Programm eine Serie ist, der Schritt des Anzeigens des Handlungsstranges der Teile des Programms den Schritt aufweist, gleichzeitig die Handlungsstränge früherer Sendungsteile des Programms anzuzeigen.

5. Verfahren nach mindestens einem der vorhergehenden Ansprüche, ferner aufweisend den Schritt des Entnehmens des gesamten Handlungsstranges des Programms aus der elektronischen Programmzeitschrift EPG und Anzeigen des abgerufenen gesamten Handlungsstranges, wenn eine Anweisung zur Anzeige des Handlungsstranges eines Programms, welches gegenwärtig nicht betrachtet wird, eingegeben wird.

6. Verfahren nach Anspruch 5, wobei der Schritt der Entnahme des gesamten Handlungsstranges des Programms den Schritt der Entnahme des gesamten Handlungsstranges des Programms aus der Ereignisinformationstabelle EIT, welche in der elektronischen Programmzeitschrift enthalten ist, aufweist.

7. Verfahren nach mindestens einem der vorhergehenden Ansprüche, wobei die elektronische Programmzeitschrift EPG und der Handlungsstrang mit Bildschirmanzeige OSD-Signalen angezeigt werden.

8. Rundfunkempfänger zur Anzeige des Handlungsstranges eines Programms, wobei ein Programm eine Folge von Programmteilen aufweist und ein Programmhandlungsstrang eine Folge von Deskriptoren aufweist, welche der Folge von Programmteilen entsprechen, wobei der Rundfunkempfänger aufweist:
- Tuner-/Demodulatormittel (302) zum Empfangen und Demodulieren eines Rundfunksignals über einen von einem Nutzer gewählten Kanal;
- Demultiplexermittel (304) zum Abrufen eines AV-Datenstroms aus dem demodulierten Rundfunksignal, so dass der Nutzer ein Bild des AV-Datenstroms betrachten kann, wobei das Demultiplexermittel (304) ferner angepasst ist, um eine elektronische Programmzeitschrift EPG aus dem demodulierten Rundfunksignal zu entnehmen, wobei die elektronische Programmzeitschrift EPG eine Ereignisinformationstabelle EIT enthält, welche die Deskriptoren aufweist, welche in dem Handlungsstrang eines vorbestimmten Programms enthalten sind, welche gemäß einem entsprechenden Programmzustand des Programms klassifiziert wurden;
- Speichermittel (306) zum Speichern der ausgewählten elektronischen Programmzeitschrift EPG;
- Anzeigemittel (312) zum Anzeigen des Bildes des AV-Datenstroms und zum gleichzeitigen Anzeigen eines Handlungsstrangsymbols zur Verwendung bei der Anweisung zur Anzeige des Handlungsstranges des Programms;
- Nutzerschnittstellenmittel (310) zum Empfang einer Auswahlanweisung durch das Handlungsstrangsymbol; und
- ein zentrales Prozessormittel (308) zur Steuerung des Demultiplexermittels (304),
wobei das zentrale Prozessormittel (308) angepasst ist, um einen Sendungsverlaufszustand eines Programms zu berechnen, das aktuell betrachtet wird, unter Verwendung der elektronischen Programmzeitschrift EPG und um Deskriptoren, welche in dem Handlungsstrang des Programms bis zu dem berechneten Sendungsverlaufszustand enthalten sind, aus der elektronischen Programmzeitschrift EPG zu entnehmen, und um die entnommenen Deskriptoren anzuzeigen, welche in dem Handlungsstrang enthalten sind, wenn die Auswahlanweisung durch das Handlungsstrangsymbol über das Nutzerschnittstellenmittel (310) eingegeben wird.

9. Rundfunkempfänger nach Anspruch 8, wobei das zentrale Prozessormittel (308) ferner angepasst ist, eine Anfangszeit und eine Sendungsdauer des Programms und eine aktuelle Zeit aus einer Ereignisinformationstabelle EIT abzurufen, welche in der elektronischen Programmzeitschrift EPG enthalten ist, um den Sendungsverlaufszustand zu berechnen.

10. Rundfunkempfänger nach Anspruch 8 oder 9, wobei das zentrale Prozessormittel (308) ferner angepasst ist, um den Deskriptor, welcher in dem Handlungsverlauf des Programms enthalten ist, aus einer Ereignisinformationstabelle EIT abzurufen, welche in der elektronischen Programmzeitschrift EPG enthalten ist.

11. Rundfunkempfänger nach mindestens einem der Ansprüche 8 bis 10, wobei wenn das Programm eine Serie ist, das zentrale Prozessormittel (308) weiter angepasst ist, um gleichzeitig die Handlungsstränge früherer Sendungsteile des Programms anzuzeigen.

12. Rundfunkempfänger nach mindestens einem der Ansprüche 8 bis 11, wobei das Handlungsstrangsymbol, die elektronische Programmzeitschrift EPG und der Handlungsstrang mit Bildschirmanzeige OSD- Signalen angezeigt werden.

## Revendications

1. Procédé d'affichage du déroulement d'un programme dans un récepteur de diffusion, dans lequel un programme comprend une séquence de parties de programme et un déroulement de programme comprend une séquence de descripteurs correspondant à ladite séquence de parties de programme, le procédé comprenant les étapes consistant à :
au niveau d'une station de diffusion :
- classer les descripteurs inclus dans le déroulement d'un programme prédéterminé en fonction de l'état de progression du programme et insérer les déroulements classés dans une table d'informations d'événements EIT,
- générer un guide de programme électronique EPG contenant la table d'informations d'événements EIT et diffuser le guide de programme électronique EPG en même temps que le signal de diffusion du programme,
au niveau du récepteur de diffusion :
- recevoir le guide de programme électronique EPG et le signal de diffusion au niveau d'un récepteur de diffusion,
- extraire le guide de programme électronique EPG du signal de diffusion reçu et mémoriser le guide de programme électronique EPG dans un moyen de mémoire (306),
- si une instruction d'afficher le guide de programme électronique EPG est appliquée en entrée par le biais d'un moyen d'interface d'utilisateur (310), lire le guide de programme électronique EPG à partir du moyen de mémoire (306) pour afficher le guide de programme électronique EPG lu sur un écran (312) par le biais d'une unité centrale (308),
- si un programme est sélectionné sur le guide de programme électronique EPG affiché et qu'une instruction d'afficher le déroulement du programme est appliquée en entrée, calculer un état de progression de diffusion du programme en utilisant le guide de programme électronique EPG, et
- extraire les descripteurs inclus dans le déroulement du programme jusqu'à l'état de progression de diffusion calculé à partir du guide de programme électronique EPG et afficher les descripteurs extraits.

2. Procédé selon la revendication 1, dans lequel l'étape de calcul de l'état de progression de diffusion comprend l'étape d'extraction d'un instant de début et d'une durée de diffusion du programme, et d'un temps actuel à partir de la table d'informations d'événements EIT contenue dans le guide de programme électronique EPG pour calculer l'état de progression de diffusion.

3. Procédé selon la revendication 1 ou 2, dans lequel l'étape d'extraction des descripteurs inclus dans le déroulement du programme comprend l'étape d'extraction des descripteurs inclus dans le déroulement du programme à partir de la table d'informations d'événements EIT contenue dans le guide de programme électronique EPG.

4. Procédé selon au moins l'une des revendications précédentes, dans lequel, si le programme est un feuilleton, l'étape d'affichage du déroulement des parties du programme comprend l'étape d'affichage simultané des déroulements de parties précédemment diffusées du programme.

5. Procédé selon au moins l'une des revendications précédentes, comprenant en outre l'étape d'extraction de la totalité du déroulement du programme à partir du guide de programme électronique EPG et l'affichage de la totalité du déroulement extrait, si une instruction d'afficher le déroulement d'un programme qui n'est actuellement pas visualisé est appliquée en entrée.

6. Procédé selon la revendication 5, dans lequel l'étape d'extraction de la totalité du déroulement du programme comprend l'étape d'extraction de la totalité du déroulement du programme à partir de la table d'informations d'événements EIT contenue dans le guide de programme électronique.

7. Procédé selon au moins l'une des revendications précédentes, dans lequel le guide de programme électronique EPG et le déroulement sont affichés avec des signaux d'affichage à l'écran OSD.

8. Récepteur de diffusion destiné à afficher le déroulement d'un programme, où le programme comprend une séquence de parties de programme et le déroulement de programme comprend une séquence de descripteurs correspondant à ladite séquence de parties de programme, le récepteur de diffusion comprenant :
- un moyen de syntoniseur/démodulateur (302) destiné à recevoir et à démoduler un signal de diffusion sur un canal sélectionné par un utilisateur,
- un moyen de démultiplexeur (304) destiné à extraire un flux AV à partir du signal de diffusion démodulé, de sorte que l'utilisateur puisse visualiser une image du flux AV, ledit moyen de démultiplexeur (304) étant en outre adapté pour extraire un guide de programme électronique EPG à partir du signal de diffusion démodulé, le guide de programme électronique EPG contenant une table d'informations d'événements EIT comprenant les descripteurs inclus dans le déroulement d'un programme prédéterminé qui a été classé en fonction d'un état de progression correspondant du programme,
- un moyen de mémoire (306) destiné à mémoriser le guide de programme électronique EPG extrait,
- un moyen d'affichage (312) destiné à afficher l'image du flux AV et à afficher simultanément une icône de déroulement en vue d'une utilisation pour donner pour instruction d'afficher le déroulement du programme,
- un moyen d'interface d'utilisateur (310) destiné à recevoir une instruction de sélection par le biais de l'icône de déroulement, et
- un moyen de traitement central (308) destiné à commander le moyen de démultiplexeur (304), où le moyen de traitement central (308) est adapté pour calculer un état de progression de diffusion d'un programme qui est actuellement visualisé en utilisant le guide de programme électronique EPG et pour extraire les descripteurs inclus dans le déroulement du programme jusqu'à l'état de progression de diffusion calculé à partir du guide de programme électronique EPG et pour afficher les descripteurs extraits inclus dans le déroulement, si l'instruction de sélection par le biais de l'icône de déroulement est appliquée en entrée par le biais du moyen d'interface d'utilisateur (310).

9. Récepteur de diffusion selon la revendication 8, dans lequel le moyen de traitement central (308) est en outre adapté pour extraire un temps de début et une durée de diffusion du programme, et un temps actuel à partir d'une table d'informations d'événements EIT contenue dans le guide de programme électronique EPG pour calculer l'état de progression de la diffusion.

10. Récepteur de diffusion selon la revendication 8 ou 9, dans lequel le moyen de traitement central (308) est en outre adapté pour extraire les descripteurs inclus dans le déroulement du programme à partir d'une table d'informations d'événements EIT contenue dans le guide de programme électronique EPG.

11. Récepteur de diffusion selon au moins l'une des revendications 8 à 10, dans lequel, si le programme est un feuilleton, le moyen de traitement central (308) est en outre adapté pour afficher simultanément les déroulements des parties du programme précédemment diffusées.

12. Récepteur de diffusion selon au moins l'une des revendications 8 à 11, dans lequel l'icône de déroulement, le guide de programme électronique EPG et le déroulement sont affichés avec des signaux d'affichage à l'écran OSD.
